# EUROPEAN PATENT APPLICATION

(11) **EP 3 278 656 A1**
(43) Date of publication of application: **07.02.2018**
(21) Application number: 16425079.7
(22) Date of filing: 01.08.2016
(51) Int. Cl.: A01D 84/00, B65G 15/42, A01D 57/20

(54) **RAKE ASSEMBLY**

(71) Applicant: I.G. S.R.L., 48026 Russi (RA) (IT)
(72) Inventor: Ravaglia, Paolo, 48012 Bagnacavallo RA (IT)
(74) Representative: Modiano, Micaela Nadia

(57) **Abstract**

A rake assembly, for the transfer and conveyance of agricultural products such as grass, hay, forage, wheat, corn and the like, cut and distributed on the ground, the assembly (1) comprising a framework (2) which can be coupled to a drive unit for its movement along an advancement direction (A); the framework (2) is associated with elements (3) for lifting and delivering the agricultural products to at least one conveyor belt (4), which faces the elements (3) and is proximate to them, for the transfer and conveyance of the agricultural products along a work direction (B) that is defined by the belt (4), until the agricultural products are released in a corresponding unloading region (C); the assembly comprises at least one elastically deformable plate (10), which is coupled stably to the belt (4) and is at least partially directed, with one of its faces, toward the unloading region (C), in order to facilitate the transfer and conveyance, on the part of the belt (4), of the agricultural products lifted by the elements (3).

## Description

The present invention relates to a rake assembly, i.e., an agricultural machine intended to transfer and convey agricultural products.

As is known, in the agricultural sector it is necessary to gather regularly grass and other plants previously cut or mowed, so as to be able to have them available for subsequent treatments or uses.

By way of example, it is noted that in the zootechnical sector grass, wheat, corn and/or hay are usually cut or mowed and then gathered in order to be able to use them for feeding animals.

In order to perform gathering, according to procedures which are by now consolidated, machines such as mowers or the like are sent to the agricultural field of interest and cut the plants, leaving the products thus cut randomly distributed on the ground.

Subsequent gathering, performed by round balers or similar apparatuses, does not occur before an additional type of agricultural machine, also known as rake, has in turn traveled over the entire extension of the field.

The task of the rake is to accumulate the agricultural products along ordered rows which are up to 2 meters wide and are known as swaths.

Thanks to the preliminary work of the rake, the round balers can merely follow the path traced by the rakes, thus gathering much more rapidly the entire mass of agricultural products that has been distributed on the ground, in order to then compact them in bales or in any case assign them to subsequent treatments.

Some rakes of a more traditional type perform their function by means of teeth which drag on the ground while they rotate about a vertical axis. In this way, the grass (or other agricultural product) is moved transversely to the advancement direction, accumulating in tidy rows.

This method of operation is being abandoned gradually, especially by operators in the sector who seek higher quality. The dragging of the teeth on the ground in fact entails the simultaneous entrainment of soil, debris and other impurities, which end up mixing with the grass and therefore are gathered together with it, with obviously unwelcome consequences.

More advanced solutions have therefore become widespread in which the rakes are provided with a gathering apparatus provided with various series of teeth, which are distributed horizontally (transversely to the advancement direction), each tooth moving with a rotary motion about a horizontal axis (which is perpendicular to the advancement direction).

Thus, during the movement of the machine, the teeth can lift the agricultural products that they encounter (without picking up soil) and deliver them behind such teeth, where one or two mutually aligned conveyor belts are arranged which are oriented parallel to the ground and at right angles to the advancement direction.

The belts can have the same sliding direction or an opposite direction, but in any case, while the machine moves forward each one of them receives the agricultural products from the gathering unit to then move them in a direction that is perpendicular to the advancement direction and then deposit them at one of their ends or deliver them to the adjacent one (as a function of the sliding direction), in any case ultimately obtaining the desired swaths.

The belt therefore has a crucially important role in the entire process, since it performs an entrainment action on the regularity of which the final quality of the swath depends.

However, this solution is not free from drawbacks.

At the ends of the belt, where it reverses its sliding direction, by winding around the rollers intended for its support and movement, accumulations of product often form which hinder or slow the normal flow of material being gathered. This occurs in particular at the end that lies opposite the end toward which the products are entrained and when the product on the ground is partially intertwined so as to form tangles.

This occurs especially when, before the rake, the ground is covered by additional machines known as tedders, which perform a preliminary movement of the product in order to ventilate it, distribute it better and accelerate its drying. In this case, the tangles are in fact formed by the flexible teeth with which the tedders are indeed provided and which, during their combined rotary and translational motion, leave the blades of grass (or of another agricultural product) mutually intertwined or in any case connected.

When the gathering unit of the rake attempts to lift intertwined agricultural products, the blades of grass do not separate from the contiguous ones but are instead retained by them, since they are concatenated. Normally, this is not a problem, since as soon as the teeth encounter these tangles, the first blade that is lifted entrains the contiguous ones. However, when this occurs at the end portion of the belt that lies opposite the one that directly faces the unloading area, an absolutely unwelcome situation occurs.

The lifting speed is in fact such that the lifted product does not detach from the contiguous ones before reaching the opposite side of the belt, where moreover the lateral containment shoulder that usually faces the belt on the opposite side with respect to the gathering units is interrupted.

Thus, the agricultural product tends to fall on the opposite side, behind the belt, while at the same time it is subjected to the entrainment action of such belt: the consequent stalling keeps it substantially motionless while additional product is lifted, causing the forming of even considerable accumulations of material at the end of the containment shoulder.

This phenomenon soon causes clogging of the belt or the forming of an irregular swath, since it contains unwelcome mounds which are indeed constituted by the masses of product that suddenly the belt moves and is able to entrain, to then unload them onto the ground on the opposite side. The operator is thus forced to stop the machine and intervene manually, with evident inconveniences and waste of time (and loss of productivity).

Moreover, it should be noted that the constructive choices adopted for the belts, starting from the material of which they are made, are typically conceived to ensure good grip with the agricultural products, so as to facilitate their entrainment.

The use of belts having limited grip is in fact to be avoided, since entrainment difficulties would be obtained and therefore the operating speed and the shape of the swath would be compromised.

In this context, a first solution to the cited problem might be to further increase the grip (the friction coefficient) of the belts, indeed to force the entrainment of the agricultural products. However, this choice is to be rejected, since excessive grip would cause problems upon unloading: the belt, which is wound in a loop along the product transfer direction, might in fact entrain with it the products even during its return stroke, without releasing them correctly.

Various solutions have therefore been sought in order to obviate these drawbacks, but they have turned out to be inadequate and unsatisfactory, since they provide for the assembly of complex additional apparatuses on the belt, which however must be removed if one wishes to reverse the direction of translation of the belt, for example to pass from the configuration suitable for forming central swaths (in which the forming of mounds is frequent) to the one suitable for forming lateral swaths (in which mounds normally do not form).

Therefore, these are highly laborious and expensive solutions which in any case, during normal use of the rake, require constant settings and far too frequent maintenance activities.

The aim of the present invention is to solve the problems described above, by providing an assembly capable of forming swaths effectively, avoiding or in any case reducing the risk of clogging or unwanted mounds of product in such swaths.

Within this aim, an object of the invention is to provide an assembly that is capable of forming swaths effectively, obviating the problem of potential clogging caused by tangles of agricultural products, with a solution that is structurally simple.

Another object of the invention is to provide an assembly that is versatile and can be adapted rapidly and easily to the different operating modes that one wishes to adopt, without requiring complex interventions for assembly and/or disassembly.

Another object of the invention is to provide an assembly that ensures high reliability in operation and can be obtained easily starting from commonly commercially available elements and materials.

Another object of the invention is to provide an assembly that adopts a technical and structural architecture that is alternative to those of assemblies of the known type.

Another object of the invention is to provide an assembly that has low costs and is safe in application.

This aim and these and other objects that will become better apparent hereinafter are achieved by a rake, for transferring and conveying agricultural products such as grass, hay, forage, wheat, corn and the like, cut and distributed on the ground, which comprises a framework which can be coupled to a drive unit, for its movement along an advancement direction, said framework being associated with elements for lifting and delivering the agricultural products to at least one conveyor belt which faces and is proximate to said elements, for the transfer and conveyance of the agricultural products along a work direction defined by said belts, until the agricultural products are released in a corresponding unloading region, characterized in that it comprises at least one elastically deformable plate, which is coupled stably to said belt and is at least partially directed, with one of its faces, toward the unloading region in order to facilitate the transfer and conveyance, on the part of said belt, of the agricultural products lifted by said elements.

Further characteristics and advantages of the invention will become better apparent from the description of a preferred but not exclusive embodiment of the assembly according to the invention, illustrated by way of nonlimiting example in the accompanying drawings, wherein:
Figure 1 is a perspective lateral front view, with respect to the advancement direction, of the rake assembly according to the invention;
Figure 2 is a highly enlarged-scale view of a detail of Figure 1;
Figure 3 is a view of the assembly of Figure 1, without the lifting and delivery elements;

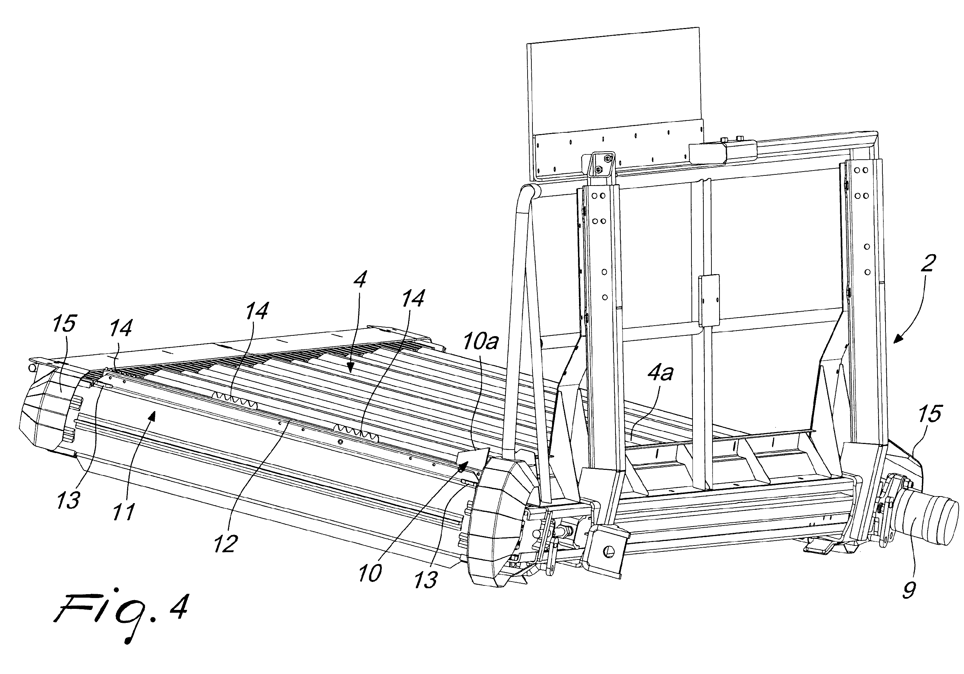

Figure 4 is a perspective lateral rear view, with respect to the advancement direction, of the assembly of Figure 1 without the lifting and delivery elements according to Figure 3.

With particular reference to the cited figures, the reference numeral 1 generally designates a rake assembly, intended for the transfer and conveyance of agricultural products, such as grass, hay, forage, wheat, corn and the like, (previously) cut and distributed on the ground (typically an agricultural field).

More precisely, in the manners that will be described hereinafter, the assembly 1 is designed to transfer and convey previously cut agricultural products, accumulating them along tidy rows (known as swaths).

The tidy distribution thus obtained in fact allows quicker and easier gathering of the grass (or other agricultural product) on the part of other agricultural machines as a function of the specific requirements and of the treatments for which it is intended.

In this regard, it should be noted for example that it is possible to send subsequently onto the agricultural field round balers or similar machines, to gather the grass and subsequently form bales or ensilage for consequent use in the zootechnical field, as feed for animals.

Furthermore, it should be noted that prior to the intervention of the assembly 1 the ground can be covered by tedders or similar machines, which increase the quality of the agricultural product by distributing it on the ground uniformly and in a ventilated manner, thus accelerating its drying.

The innovative particularities of the assembly 1, as will become apparent hereinafter, indeed allow to ensure the optimum forming of swaths (and therefore of bales or the like) even if the tedder forms along the ground tangles or "webs" composed of intertwined blades of grass or other previously cut agricultural products.

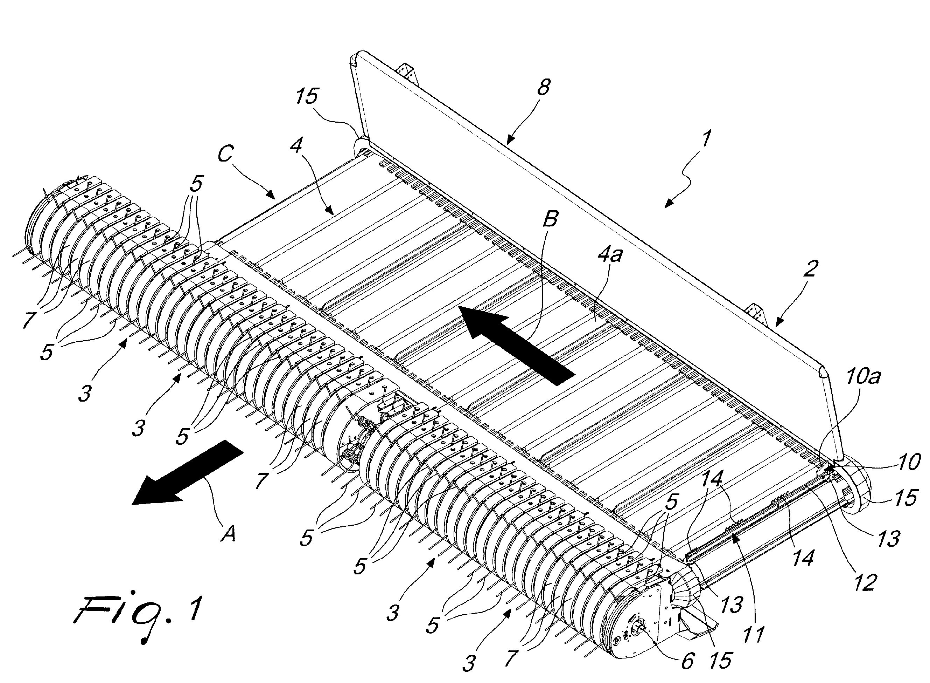

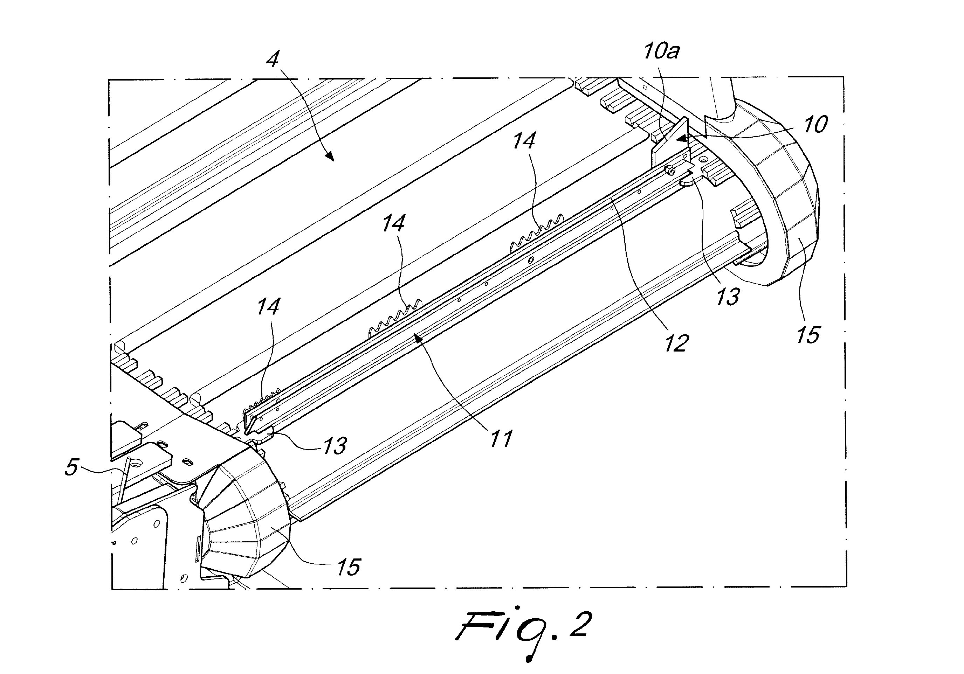

The assembly 1 therefore comprises a framework 2 which can be coupled to a drive unit, even according to known manners, so that it can be moved along an advancement direction A (shown in Figures 1 and 2), along an agricultural field of interest, where indeed the agricultural products with which the swaths are to be formed are distributed randomly and indiscriminately.

It is noted that typically the framework 2 (as well as the assembly 1 in general) is towed along the ground by a tractor or a similar vehicle provided with the drive unit mentioned above and coupled to the framework 2. In any case, mounting the drive unit on board the assembly 1 itself (conveniently modified), so as to motorize it independently, is not excluded.

In turn, the framework 2 is associated with elements 3 for lifting and delivering the agricultural products to at least one conveyor belt 4, which faces and is proximate to the elements 3.

In greater detail, the lifting and delivery elements 3 preferably comprise at least one row of teeth 5 which are mutually aligned and rotate about a working shaft 6. Also with reference to the constructive solution shown in the accompanying figures (in particular in Figure 1), the assembly 1 is preferably provided with a plurality of rows (which are mutually parallel) of teeth 5, which can move in respective gaps formed among a plurality of spacers 7 (or plates or straps).

According to methods that are substantially known, while the assembly 1 advances along the ground, the teeth 5 lift the agricultural products and deliver them behind themselves to the belt 4, which transfers and conveys them along a working direction B (shown in Figures 1 and 2), formed by the belt 4 and substantially transverse to the advancement direction A.

The action for the transfer and conveyance of the belt 4 can thus continue until the agricultural products are released in a corresponding unloading region C, where the swath forms progressively.

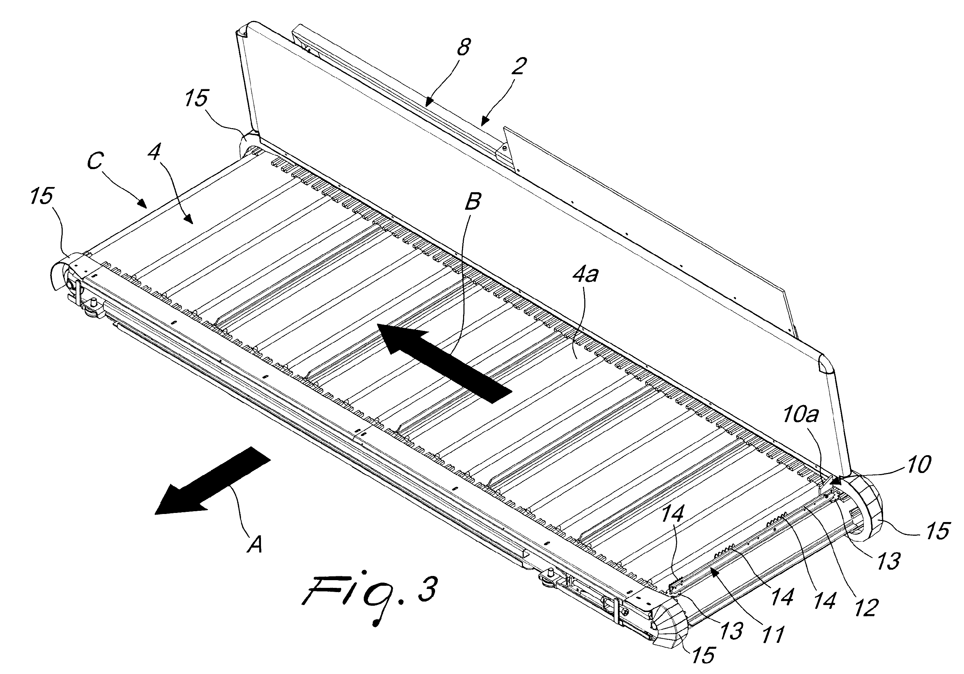

In order to facilitate the correct movement of the agricultural products on the part of the belt 4, the assembly 1 also comprises a containment barrier 8 for the agricultural products (for example of the type of a rigid screen or a sheet made of polymeric material). The barrier 8 is arranged along the side 4a of the belt 4 that lies opposite the lifting and delivery elements 3. The containment barrier 8, shown in Figures 1 and 2, has instead been eliminated in Figure 3 in order to facilitate better viewing of the elements (in that figure) located at the back.

It should be noted that first of all the conveyor belt 4 can move around a predefined closed path (which corresponds to the work direction B) along a single direction. Likewise, assemblies 1 are provided in which the same belt 4 can equally work along both directions of motion (in an operating mode which moreover further enhances the particularities of the invention, as will become apparent hereinafter).

In greater detail, Figures 1 and 2 show a single sliding direction for the work direction B, but indeed assemblies 1 are provided in which the belt 4 can move only in the opposite direction or in which it is possible to choose equally the direction in which one wishes to transfer and convey the agricultural products along the work direction B.

In the accompanying Figures 1 and 3, the unloading region C has been designated, which corresponds to operation along the single direction of movement of the belt 4 shown in turn in the same figures. Evidently, if the belt 4 moves in the opposite direction, the unloading region C is correspondingly located on the other side of the belt 4.

It is specified furthermore that although the accompanying figures show an assembly 1 provided with a single belt 4, the production and marketing of assemblies 1 provided with two (or more) belts 4, mutually aligned along a common work direction B and arranged so as to face each other and proximate to respective elements 3, is not excluded.

In this case, the two belts 4 can work with opposite directions and directed outward (so as to convey the agricultural products toward both sides of the advancing assembly 1 and form two swaths) or inward (so as to deposit the agricultural products at the center and form a single swath), or can operate with the same direction, with one belt 4 delivering the products to the other, which in turn unloads them at the opposite end and achieves the forming of a single swath (in this case, the unloading region C of the first belt 4 in practice coincides with a first portion of the second one).

By thus moving along the agricultural field, along the advancement direction A, the assembly 1 gathers the agricultural products distributed thereon by means of the elements 3, to then deposit them again along one or both sides (in the unloading regions C), forming a central swath or one or two lateral swaths.

Again with reference to the belt 4 (to each belt 4), according to per se known methods it is preferably wound in a loop around a pair of supporting shafts which are mutually parallel and perpendicular to the work direction B. In this embodiment, therefore, at least one of the supporting shafts, which meshes with the belt 4 (for example by means of a pulley with which it is provided) is rotated about its own main axis by a respective main motor 9, and this indeed causes the movement of the belt 4.

It should be noted that in this context the agricultural products that are lifted and delivered by the elements 3 are deposited on a useful surface of the belt 4 that corresponds substantially to the entire upper rectilinear segment (interposed between the supporting shafts) of the belt 4 wound in a loop.

According to the invention, the assembly 1 comprises at least one elastically deformable plate 10; the plate 10 is coupled stably to the belt 4 and is at least partially directed, with one of its faces, toward the unloading region C.

In practice, in other words, the plate 10 is fixed with a perimetric portion thereof to the belt 4 to then rise from it, at right angles or variously inclined, in such a manner as to direct one of its two faces, at all times and for any direction of motion of the belt 4, toward the unloading region C.

In any case, therefore, while it moves integrally with the belt 4, the plate 10 is capable of facilitating the transfer and conveyance, on the part of the belt 4, of the agricultural products lifted by the elements 3.

When the products are entangled together, the plate 10 in fact engages them with its face directed toward the unloading region C, entrains them with itself along the work direction B and tends to loosen the tangles and/or break the bonds, indeed facilitating grip on the belt 4 and in any case the entrainment on the part of the latter.

This prevents the tangles from tending to fall on the opposite side with respect to the elements 3, where the barrier 8 ends, generating the stall condition, and subsequent clogging, which is typical of known solutions, and thus allows to achieve the intended aim.

Of course, when the agricultural products do not have abnormal tangles or intertwinings, the plate 10 does not hinder normal operation and indeed facilitates in any case entrainment on the part of the belt 4.

Elastic deformability ensures at the same time the ability to withstand any particularly intense stresses, without permanent breakages and/or without damaging the adjacent belts 4.

The stresses transmitted by the agricultural products in fact can sometimes force the bending of the plate 10, up to the point of even touching the belt 4 itself or the adjacent one. Elastic deformability avoids the danger that in this situation the plate 10 might be deformed permanently and/or might damage the belt 4 that makes contact with the plate 10.

More generally, it should be noted that the choice to resort to an elastically deformable plate 10 is of absolute interest in applications which provide for two belts 4 which are aligned (along a common work direction B).

In these applications, in fact, the plate 10 of each belt 4 is designed to transit cyclically in the gap between the two belts 4.

It might therefore occur that a plate 10, which is integral with one of the belts 4, slides against the adjacent belt 4: in this case, the elastic deformability prevents this from causing damage to the plate 10 and/or to the adjacent belt 4 itself.

Even if the risk mentioned above is negligible, there is still the (far more frequent) possibility that the plate 10 of a belt 4 might affect the plate 10 of the adjacent belt 4: again, even in this case the colliding plates 10 would merely undergo a temporary elastic deformation, which would disappear as soon as they continue their motion, moving mutually apart.

It is therefore possible to adopt plates 10 without having to provide large distances (gaps) between adjacent belts 4 and likewise the elastically deformable plates 10 allow to keep unchanged the distance (the gap) between adjacent existing belts 4, thus being able to work effectively on already circulating devices with minimal modifications.

Although the use of plates 10 having a rectangular or square (or other) shape is not excluded, one embodiment of considerable practical interest (shown merely by way of example in the accompanying figures) provides for the edge 10a of the plate 10 that is arranged at the opposite end with respect to the belt 4 to be at least partially pointed (meaning with this that it can be absolutely sharp or can have at least one partially blunted or rounded tip).

The pointed edge 10a can increase the action of the plate 10 in breaking the bonds and intertwinings with which the agricultural products may appear, thus increasing the effectiveness of the invention.

In particular, the plate 10 is coupled stably to the belt 4 with an orientation that is substantially perpendicular to the work direction B. In this manner, the entire extension of the plate 10 (all of its face directed toward the unloading region C) is capable of affecting agricultural products lifted by the elements 3 and therefore the effectiveness of the plate 10 is maximized.

Advantageously, in order to obtain the desired elastic deformability, the plate 10 is made of an elastomeric material, of the kind of rubber and the like.

For example, mention is made of the (preferred but not exclusive) possibility to provide the plate 10 by obtaining it from a fabric-lined rubber belt.

In any case, whatever the specific constructive choice, the elastomeric material ensures an action on the product that is more vigorous thanks to the high coefficient of friction of said rubber. Furthermore, by deforming, the rubber plate 10 adapts optimally to the region of contact with the agricultural product, creating a larger contact area.

Moreover, the high deformability of the rubber allows to maintain a greater height of the plate 10 (of the pointed edge 10a): as shown, in fact, even if the dimensions are such as to cause at each cycle the temporary sliding of the plate 10 on the adjacent belt 4 or the collision between plates 10 of adjacent belts 4, the elastic deformability in fact avoids the danger of damage to the involved components, since each plate 10 can bend elastically and then resume the nominal configuration.

In the embodiment shown in the accompanying figures by way of nonlimiting example of the application of the invention, the plate 10 has a trapezoidal shape, which allows to form an edge 10a that has a tip that penetrates with great ease the agricultural products being moved.

A similar result can be achieved by adopting a plate 10 that has a triangular shape.

It is useful to note, in any case, that plates 10 can also be provided according to other shapes, even provided with two or more tips (or none), and are in any case within the protective scope claimed herein.

With further reference to the constructive solution shown in the accompanying figures, the plate 10 is arranged proximate to the side 4a of the belt 4 that lies opposite the elements 3 (and therefore is intended to move proximate to the barrier 8).

Usually, in fact, the unwelcome accumulations of product that the belt 4 is unable to entrain correctly indeed form at this transverse height and therefore this choice is of considerable practical interest.

Moreover, it is useful to note that usually at this transverse height the agricultural products are normally slowed down by the friction action generated by the barrier 8: this sometimes causes difficulty in entrainment and a slowing which can also generate mounds or can be in any case unwelcome.

The plate 10 that is integral with the belt 4 and can move along said transverse height is capable of obviating this drawback effectively, propelling with a speed that is equal to the speed of the belt 4 also the products that move close to the barrier 8 or in contact with it, thus smoothing the flow of products toward the unloading region C.

Likewise, placement of the plate 10 at a different transverse height, as a function of the specific requirements of application, is not excluded.

Although it is specified that a single plate 10 can be coupled to the belt 4, the assembly 1 may also comprise a plurality of plates 10 aligned along an imaginary straight line that is perpendicular to the work direction B.

At the same time, the assembly 1 may also comprise a plurality of plates 10 distributed longitudinally along the belt 4 (therefore at a same transverse height).

The protection claimed herein is in any case extended to any combination of the options indicated above, and more generally to any distribution, along the entire surface of the belt 4, of a number at will of plates 10.

Conveniently, the assembly 1 comprises a supporting apparatus 11, which is coupled stably to the belt 4, for the plate 10 (or plates 10). The plate 10 can be supported by the apparatus 11 in one selectively among a plurality of different positions (different transverse heights, for example), as a function of the specific requirements and with the possibility to modify simply and rapidly the choice made as the surrounding conditions change.

In particular, in the preferred embodiment, proposed in the accompanying figures by way of nonlimiting example, the supporting apparatus 11 comprises a transverse bar 12, which rests on the belt 4 (although it might be slightly raised with respect to it) and is gripped rigidly at its ends by respective clamps 13 which are integral with the belt 4 (as can be seen in particular from Figure 2).

The plate 10 is therefore rigidly supported by the bar 12; it should be noted that the bar 12 may also have additional sets of teeth 14 to facilitate the correct entrainment of the agricultural products and optionally increase the action for breaking the bonds among the agricultural products that is performed by the plate 10.

The bar 12, moreover, allows to obtain in a practical manner the embodiment described in the preceding pages, in which multiple plates 10 are arranged along an imaginary straight line that is perpendicular to the work direction B.

The bar 12 is in fact arranged along such imaginary straight line and therefore it is possible to mount thereon two or more plates 10 in order to obtain the desired result.

Two or more bars 12 can also be arranged along the belt 4, so as to be able to obtain additional distributions of the plates 10.

Even more particularly, the plate 10 is fixed to the bar 12 by means of connecting units of the type of screws, bolts and the like. Each one of said units can be inserted at an axial height of the bar 12 that is chosen at will, indeed so as to allow coupling to the belt 4 in one selectively among a plurality of different positions.

By choosing appropriately the unit to be used (even of a known type), it is possible to render the coupling provided by it easily detachable, so as to allow practical methods for disassembly and reassembly (at a different transverse height) of each plate 10, so as to adapt it to different operating conditions.

Advantageously, the assembly 1 comprises at least one housing 15 which is arranged so as to cover an external end portion of the framework 2 and more precisely the end portion that faces, proximate to the unloading region C of the agricultural products (which of course depends on the direction of motion of the belt 4), the side 4a of the belt 4 that lies opposite the elements 3.

When the plate 10, in its integral motion with the belt 4, reaches the unloading region C of the agricultural products, said products slide against the housing 15, which by friction imparts thereto a thrust in the opposite direction, such as to avoid the danger that the products might be entrained below the belt 4 (following the return stroke of the plate 10) and/or might become entangled around the belt 4 during its motion reversal around the corresponding supporting shaft.

Normally, in fact, due to the relative motion of the assembly 1 with respect to the ground (along the advancement direction A) and to the friction and retention action generated by the ground and by the products that have already fallen, the trajectory traced in falling by the agricultural products tends indeed to deviate toward such external end portion of the framework 2, where the housing 15 is arranged effectively.

The housing 15 therefore facilitates the release to the ground of the agricultural products, since it ensures the quick disengagement of the plate 10 from the agricultural products at the unloading region C.

In a first embodiment, the assembly 1 is provided with a single housing 15 (arranged proximate to the designated unloading region C).

In the embodiment of the accompanying figures, which is a nonlimiting illustration of the application of the invention, the housing 15 is substantially shaped like a dome, which is optionally open toward the top (as can be seen in Figure 3), but different constructive options are not excluded.

Even more particularly, in the preferred embodiment the assembly 1 can comprise two housings 15, arranged so as to cover respective mutually opposite external end portions of the framework 2, which face on opposite sides the side 4a of the belt 4.

The use of two housings 15 arranged as indicated in the preceding paragraph achieves a dual goal.

First of all, in fact, this allows to benefit from the action of the housing 15 in the unloading region C even if the direction of motion of the belt 4 is reversed.

Moreover, even without reversing the direction of rotation, the housing 15 arranged on the opposite side with respect to the unloading region C (where, as shown, the mounds that are responsible for clogging form) is in any case useful. The housing 15 can in fact contrast the natural tendency of the products to fall on the opposite side, facilitating correct entrainment by the belt 4 and the plate 10.

As can be deduced from the figures, two additional housings 15 are also arranged on the other side of the belt 4 (toward the elements 3).

Operation of the assembly according to the invention is therefore evident from what has been described so far.

As already shown, the assembly 1 can be entrained by a respective drive unit along an agricultural field, on which agricultural products (grass or others) cut previously (for example by a mower) are distributed in a random and indiscriminate manner.

By advancing progressively along the ground, the assembly 1 picks up from the ground the agricultural products (by means of the teeth 5) and delivers them to each belt 4, which deposits them on the ground at one or both sides of the assembly 1, thus forming the swath, or transfers them to an adjacent belt 4.

The plate 10 allows to obviate the drawbacks often caused, in known devices, by tangles of intertwined blades of grass, which can sometimes be encountered along the path and which, once lifted, can form accumulations of material, which in turn cause clogging and other problems.

As shown, in known solutions these tangles are not entrained correctly by known belts but remain blocked by the containment shoulders and/or are retained by other blades.

Vice versa, the plate 10, with its face directed toward the unloading region C, engages the agricultural products and ensures a more energetic entrainment and conveyance action, avoiding the danger of clogging and the forming of mounds.

The pointed edge 10a penetrates the tangles, tearing blades of grass or other intertwined agricultural products, and propels them toward the unloading region C, in its integral motion with the belt 4, facilitating their correct entrainment toward the designated unloading region.

This result of unquestionable interest is achieved without having to act on the belt 4 to increase its grip, which as mentioned would in any case cause additional problems, at least during the unloading of the agricultural products.

The choice to resort to elastomeric materials such as rubber, for the plate 10, ensures an action which in this regard is even more effective thanks to the high friction coefficient that these materials have.

Moreover, it should be noted that the roughness of the opposite faces of the plate 10 is increased at will in order to raise further the friction coefficient.

In case of high stresses, the plate 10 bends and flexes elastically, and even if it touches the adjacent belt 4 when it transits at the gap between two aligned belts 4, or affects a plate 10 that is indeed integral with the adjacent belt 4, it can bend temporarily without causing any damage, subsequently returning to the nominal configuration after moving beyond the gap.

The plate 10 therefore avoids the danger that mounds or large lumps of grass (or other agricultural products) may form on the belt 4, generating clogging or being unloaded suddenly on the ground, compromising the uniformity of the formed swath, and instead ensures effective operation.

This result of unquestionable practical interest is obtained, moreover, with a solution that is structurally very simple and requires only the mounting of one or more plates 10.

Moreover, it has been pointed out that simply by mounting and removing the plates 10 it is possible to adopt different operating modes without requiring complex assembly and/or disassembly interventions, thus highlighting the high versatility of the invention.

Moreover, in case of a simple reversal of the direction of motion of the belt 4, no intervention is required, since the plate 10, by keeping its relative position unchanged with respect to the elements 5 and the side 4a of the belt 4, is in any case capable of performing its function.

In practice it has been found that the assembly according to the invention achieves fully the intended aim, since the use of an elastically deformable plate that is coupled stably to the belt and is directed with one of its faces toward the unloading region allows to form swaths in an effective manner, avoiding or at least reducing the risk of clogging or of unwanted mounds of product in such swaths.

The invention thus conceived is susceptible of numerous modifications and variations, all of which are within the scope of the appended claims; all the details may furthermore be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

Where technical features mentioned in the claims are followed by reference signs, those reference signs have been included for the sole purpose of increasing the intelligibility of the claims and accordingly such reference signs do not have any limiting effect on the interpretation of each element identified by way of example by such reference signs.

## Claims

1. A rake assembly, for the transfer and conveyance of agricultural products such as grass, hay, forage, wheat, corn and the like, cut and distributed on the ground, comprising a framework (2) which can be coupled to a drive unit for its movement along an advancement direction (A), said framework (2) being associated with elements (3) for lifting and delivering the agricultural products to at least one conveyor belt (4), which faces said elements (3) and is proximate to them, for the transfer and conveyance of the agricultural products along a work direction (B) that is defined by said belt (4), until the agricultural products are released in a corresponding unloading region (C), **characterized in that** it comprises at least one elastically deformable plate (10), which is coupled stably to said belt (4) and is at least partially directed, with one of its faces, toward the unloading region (C), in order to facilitate the transfer and conveyance, on the part of said belt (4), of the agricultural products lifted by said elements (3).

2. The assembly according to claim 1, **characterized in that** the edge (10a) of said at least one plate (10) arranged on the opposite side with respect to said belt (4) is at least partially pointed.

3. The assembly according to claim 1 or 2, **characterized in that** said at least one plate (10) is coupled stably to said belt (4) with an orientation that is substantially perpendicular to said work direction (B).

4. The assembly according to one or more of the preceding claims, **characterized in that** said at least one plate (10) is made of an elastomeric material, of the type of rubber and the like.

5. The assembly according to one or more of claims 1 to 4, **characterized in that** said at least one plate (10) has a trapezoidal shape.

6. The assembly according to one or more of claims 1 to 4, **characterized in that** said at least one plate (10) has a triangular shape.

7. The assembly according to one or more of the preceding claims, **characterized in that** said at least one plate (10) is arranged proximate to the side (4a) of said belt (4) that lies opposite said elements (3).

8. The assembly according to one or more of the preceding claims, **characterized in that** it comprises a plurality of said plates (10) aligned along an imaginary straight line that is perpendicular to said work direction (B).

9. The assembly according to one or more of the preceding claims, **characterized in that** it comprises a plurality of said plates (10) distributed longitudinally along said belt (4).

10. The assembly according to one or more of the preceding claims, **characterized in that** it comprises a supporting apparatus (11), which is coupled stably to said belt (4), for said at least one plate (10), said at least one plate (10) being supported by said apparatus (11) in one selectively among a plurality of different positions.

11. The assembly according to claim 10, **characterized in that** said supporting apparatus (11) comprises a transverse bar (12) that rests against said belt (4) and is gripped rigidly, at its ends, by respective clamps (13), which are integral with said belt (4), said at least one plate (10) being supported rigidly by said bar (12).

12. The assembly according to claim 11, **characterized in that** said at least one plate (10) is fixed to said bar (12) by means of connecting units of the type of screws, bolts and the like, which can be inserted at an axial level chosen at will of said bar (12).

13. The assembly according to one or more of the preceding claims, **characterized in that** it comprises at least one housing (15), which is arranged so as to cover an outer end portion of said framework (2), which faces, proximate to the unloading region (C) of the agricultural products, said side (4a) of said belt (4) which lies opposite said elements (3), in order to facilitate their release to the ground.

14. The assembly according to claim 13, **characterized in that** it comprises at least two of said housings (15), which are arranged so as to cover respective mutually opposite external end portions of said framework (2), which face on opposite sides said side (4a) of said belt (4).
